(19) Europäisches Patentamt / European Patent Office / Office européen des brevets

(11) **EP 2 831 616 B1**

(12) **FASCICULE DE BREVET EUROPEEN**

(45) Date de publication et mention de la délivrance du brevet:
**07.09.2016 Bulletin 2016/36**

(21) Numéro de dépôt: **13713851.7**

(22) Date de dépôt: **28.03.2013**

(51) Int Cl.:
*G01S 3/48* (2006.01)     *G01S 19/55* (2010.01)
*G01S 19/22* (2010.01)     *G01S 19/54* (2010.01)

(86) Numéro de dépôt international:
**PCT/EP2013/056684**

(87) Numéro de publication internationale:
**WO 2013/144282 (03.10.2013 Gazette 2013/40)**

(54) **PROCÉDÉ DE CALIBRATION D'ERREURS SPATIALES, PROCÉDÉ ET SYSTÈME D'ESTIMATION D'ATTITUDE D'UN ENGIN**

VERFAHREN ZUR KALIBRIERUNG VON RAUMFEHLERN SOWIE VERFAHREN UND SYSTEM ZUR EINSCHÄTZUNG DES VERHALTENS EINES FAHRZEUGS

METHOD FOR CALIBRATING SPACE ERRORS, AND METHOD AND SYSTEM FOR ESTIMATING THE ATTITUDE OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2012 FR 1200948**
**15.06.2012 FR 1201717**

(43) Date de publication de la demande:
**04.02.2015 Bulletin 2015/06**

(73) Titulaires:
• **Airbus Defence and Space SAS**
**78130 Les Mureaux (FR)**
• **Centre National d'Etudes Spatiales**
**75001 Paris (FR)**

(72) Inventeurs:
• **BROQUET, Renaud**
**F-31500 Toulouse (FR)**
• **POLLE, Bernard**
**F-31650 Saint Orens de Gameville (FR)**
• **MONTEL, Johan**
**F-81470 Maurens-Scopont (FR)**

(74) Mandataire: **Ipside**
**6, Impasse Michel Labrousse**
**31100 Toulouse (FR)**

(56) Documents cités:
**EP-A1- 2 085 787     WO-A1-00/22452**

• **GABOR M ET AL: "Satellite Satellite Single-Difference Phase Bias Calibration As Applied to Ambiguity Resolution", NAVIGATION, INSTITUTE OF NAVIGATION, FAIRFAX, VA, US, vol. 49, no. 4, 1 décembre 2002 (2002-12-01), pages 223-243, XP007913621, ISSN: 0028-1522**

**Description**

**DOMAINE TECHNIQUE**

La présente invention concerne l'estimation d'attitude d'un engin aérien ou spatial en fonction de mesures de phase de signaux radioélectriques reçus par cet engin. Plus particulièrement, la présente invention concerne la calibration d'erreurs, dites « erreurs spatiales », induites par des biais de phase affectant les mesures de phase, lesdits biais de phase dépendant d'une direction d'incidence des signaux radioélectriques par rapport à l'engin.

**ÉTAT DE LA TECHNIQUE**

Il est en effet connu, pour estimer l'attitude d'un engin spatial de type satellite, de mesurer les phases de signaux radioélectriques reçus d'un émetteur par deux bases de réception de l'engin, une base de réception consistant en deux antennes de réception, et les antennes de réception desdites deux bases de réception n'étant pas toutes alignées.

En effet, il est possible de déterminer une différence de marche des signaux radioélectriques reçus de l'émetteur par les deux antennes de réception d'une base de réception en comparant les phases mesurées sur lesdites deux antennes de réception. La direction d'incidence de l'émetteur par rapport à l'engin, c'est-à-dire la direction de l'émetteur dans un repère fixe par rapport à l'engin, peut ensuite être déterminée en fonction de deux différences de marche déterminées pour les deux bases de réception.

En estimant les directions d'incidence de deux émetteurs, il est possible d'estimer l'attitude de l'engin relativement à ces émetteurs. L'attitude absolue de l'engin peut en outre être estimée si les positions absolues respectives de l'engin et des émetteurs sont connues. De manière générale, la précision de l'estimation de l'attitude de l'engin est améliorée en considérant un nombre d'émetteurs supérieur à deux.

En considérant des émetteurs tels que des satellites d'un système global de navigation par satellites (GPS, Galileo, etc.), l'estimation de l'attitude de l'engin sera grandement facilitée. En effet, des satellites GPS, par exemple, émettent des informations de navigation qui permettent de déterminer la position de l'engin à partir d'informations de navigation reçues par des récepteurs GPS montés à bord dudit engin (voir par exemple la demande internationale WO 00/22452 A1).

Toutefois, l'estimation d'attitude en fonction de mesures de phase repose généralement sur l'hypothèse que les signaux radioélectriques reçus ont suivi un trajet unique direct depuis l'émetteur jusqu'au centre de phase de chacune des antennes de réception. Or, il existe souvent d'autres trajets, indirects, entre l'émetteur et chacune des antennes de réception. Ces trajets indirects sont liés à la présence d'éléments réfléchissants et/ou diffractants à proximité des antennes de réception de l'engin. Ainsi, un signal radioélectrique reçu de l'émetteur par une antenne de réception sera la somme d'une composante reçue via le trajet direct, dite « composante directe », et d'une composante reçue via des trajets indirects, dite « composante indirecte ».

La composante indirecte mesurée pour une antenne de réception peut généralement être assimilée à un biais de phase dont la valeur dépend essentiellement de la direction d'incidence du signal radioélectrique reçu via le trajet direct, et éventuellement de la position et de l'orientation des éléments réfléchissants et/ou diffractants lorsque ceux-ci sont mobiles.

Toutefois, pour une même direction d'incidence, les biais de phase dus aux multi-trajets varient d'une antenne de réception à une autre, de sorte que ces biais de phase ne se compensent pas dans le calcul des différences de phases entre paires d'antennes de réception et introduisent des erreurs sur les différences de phases utilisées pour l'estimation de l'attitude de l'engin. Ces erreurs sur les différences de phase sont dites « erreurs spatiales » car les biais de phase qui en sont à l'origine dépendent de la direction d'incidence considérée.

Pour calibrer les erreurs spatiales, il est possible de comparer l'attitude, estimée en fonction des différences de phases de signaux radioélectriques reçus par les trois antennes de réception, à une autre estimation de l'attitude fournie par un senseur d'attitude, distinct des trois antennes de réception, tel qu'un senseur stellaire. On comprend cependant qu'une telle solution nécessite d'embarquer dans l'engin deux systèmes distincts pour estimer l'attitude de l'engin.

**EXPOSÉ DE L'INVENTION**

La présente invention a pour objectif de remédier à tout ou partie des limitations des solutions de l'art antérieur, notamment celles exposées ci-avant, en proposant une solution qui permette de calibrer les erreurs spatiales, induites par la réception sur les antennes de réception de l'engin de composantes indirectes, qui ne nécessite pas d'utiliser un senseur d'attitude distinct desdites antennes de réception.

A cet effet, et selon un premier aspect, l'invention concerne un procédé de calibration d'erreurs spatiales induites par des biais de phase affectant des mesures de différences de phases de signaux radioélectriques reçus par au moins trois antennes de réception non alignées d'un engin, lesdits biais de phase dépendant d'une direction d'incidence des signaux radioélectriques par rapport à l'engin. Le procédé de calibration comporte, pour une paire de satellites se trouvant à un instant donné dans un champ de vue radioélectrique de l'engin, des étapes de :

- obtention de positions respectives de l'engin et des satellites de ladite paire,
- estimation d'un écart angulaire inter-satellites de ladite paire de satellites en fonction des positions respectives de l'engin et des satellites de ladite paire, de sorte à obtenir un écart angulaire inter-satellites dit « théorique »,
- estimation de directions d'incidence respectives des satellites de ladite paire par rapport à l'engin en fonction de mesures de phase de signaux radioélectriques reçus des satellites de ladite paire par les trois antennes de réception de l'engin,
- estimation de l'écart angulaire inter-satellite de ladite paire de satellites en fonction des directions d'incidence respectives des satellites de ladite paire par rapport à l'engin, de sorte à obtenir un écart angulaire inter-satellites dit « estimé »,
- estimation des erreurs spatiales pour les directions d'incidence respectives des satellites de ladite paire par rapport à l'engin en fonction de l'écart angulaire inter-satellites théorique et de l'écart angulaire inter-satellites estimé déterminés pour ladite paire de satellites.

En pratique, les erreurs spatiales seront estimées en fonction d'écarts angulaires inter-satellites théoriques et d'écarts angulaires inter-satellites estimés déterminés pour plusieurs paires de satellites, lesdites paires de satellites pouvant par exemple être considérées simultanément et/ou successivement.

Par « écart angulaire inter-satellites » d'une paire de satellites, on entend l'angle entre les directions respectives des deux satellites de cette paire par rapport à l'engin. L'intérêt d'estimer des écarts angulaires inter-satellites réside dans le fait que ceux-ci sont indépendants de l'attitude de l'engin, mais dépendent uniquement des positions respectives des satellites et de l'engin.

La calibration des erreurs spatiales est donc réalisée en estimant les écarts angulaires inter-satellites de paires de satellites de deux façons différentes :

- en fonction des positions respectives des satellites et de l'engin, de sorte à obtenir des écarts angulaires inter-satellites théoriques,
- en fonction des directions d'incidence respectives des satellites, estimées en fonction de mesures de phase affectées par les biais de phase à calibrer, de sorte à obtenir des écarts angulaires inter-satellites estimés.

En considérant les écarts angulaires inter-satellites théoriques comme dépourvus d'erreurs, et en comparant les écarts angulaires inter-satellites estimés, affectés par les biais de phase, auxdits écarts angulaires inter-satellites théoriques, il sera possible de calibrer les erreurs spatiales dans la limite de la précision des positions respectives des satellites et de l'engin.

Il est cependant à noter que, du fait que les écarts angulaires inter-satellites considérés ne dépendent pas de l'attitude de l'engin, les erreurs spatiales pourront dans certains cas n'être calibrées qu'à un biais d'attitude près. En d'autres termes, l'attitude de l'engin, éventuellement estimée après calibration et correction des erreurs spatiales, pourra être affectée d'un biais. Toutefois, ce biais d'attitude sera le même quelle que soit l'attitude réelle de l'engin et pourra, le cas échéant, être aisément détecté et à son tour calibré en mettant en oeuvre des moyens considérés comme connus de l'homme de l'art.

Dans des modes particuliers de mise en oeuvre, le procédé de calibration comporte l'une ou plusieurs des caractéristiques suivantes, prises isolément ou suivant toutes les combinaisons techniquement possibles.

Dans un mode particulier de mise en oeuvre, les erreurs spatiales sont estimées sous la forme d'un modèle paramétrique dont les paramètres sont estimés en fonction d'écarts angulaires inter-satellites théoriques et d'écarts angulaires inter-satellites estimés calculés pour plusieurs paires de satellites.

De telles dispositions permettent de réduire le nombre de directions d'incidence différentes pour lesquelles des erreurs spatiales doivent être calibrées, et donc de réduire le nombre de calculs à effectuer ainsi que la quantité d'erreurs spatiales/paramètres à mémoriser.

Dans un mode particulier de mise en oeuvre, le champ de vue radioélectrique de l'engin est préalablement partitionné en une pluralité de cônes distincts d'incidence de signaux radioélectriques par rapport à l'engin, et les erreurs spatiales sont considérées dans le modèle paramétrique comme étant les mêmes pour toute direction d'incidence à l'intérieur d'un même cône d'incidence. Les paramètres estimés du modèle paramétrique sont alors, pour chaque cône d'incidence, la valeur des erreurs spatiales pour toute direction d'incidence à l'intérieur de ce cône d'incidence.

Dans un mode particulier de mise en oeuvre, les cônes d'incidence d'élévation faible par rapport à un plan déterminé par les centres de phase des trois antennes de réception de l'engin sont d'angles solides respectifs inférieurs à ceux de cônes d'incidence d'élévation élevée par rapport audit plan.

Il a en effet été constaté que la composante indirecte est plus faible pour des directions d'incidence sensiblement normales (élévation élevée), par rapport au plan déterminé par les trois antennes de réception, que pour les directions d'incidence rasantes (élévation faible) par rapport audit plan.

De telles dispositions permettent donc d'optimiser la calibration des erreurs spatiales en estimant davantage d'erreurs spatiales pour les directions d'incidence pour lesquelles les erreurs spatiales varient beaucoup que pour les directions d'incidence pour lesquelles les erreurs spatiales varient peu.

Dans un mode particulier de mise en oeuvre, les erreurs spatiales sont estimées sous la forme d'un modèle paramétrique dont les fonctions de base sont des harmoniques sphériques.

Dans un mode particulier de mise en oeuvre, les satellites appartiennent à un système global de navigation par satellites et les trois antennes de réception sont des antennes de récepteurs dudit système global de navigation par satellites. En outre, les positions respectives des satellites et de l'engin sont déterminées à partir d'informations de navigation incluses dans les signaux radioélectriques reçus des satellites.

De telles dispositions sont avantageuses en ce que la calibration des erreurs spatiales peut être réalisée exclusivement à partir des signaux radioélectriques reçus des satellites :

- les écarts angulaires inter-satellites théoriques sont déterminés à partir des informations de navigation incluses dans les signaux radioélectriques reçus des satellites,
- les écarts angulaires inter-satellites estimés sont déterminés à partir des mesures de phase desdits signaux radioélectriques reçus des satellites.

La calibration des erreurs spatiales peut ainsi être réalisée sans utiliser d'autre senseur d'attitude que les trois antennes de réception.

Il est à noter que, dans ce mode particulier de mise en oeuvre, les écarts angulaires inter-satellites peuvent être considérés comme dépourvus d'erreurs. En effet, les positions de tels satellites sont couramment estimées à quelques mètres près. D'autre part, la position de l'engin peut être estimée à quelques mètres près par les récepteurs du système global de navigation par satellites. Du fait de l'éloignement entre les satellites et l'engin qui, dans le cas d'un engin en orbite basse, est très supérieur à 1000 kilomètres, il s'en suit que l'estimation des écarts angulaires inter-satellites théoriques à partir des positions des satellites et de l'engin est extrêmement précise et peut être considérée au premier ordre comme dépourvue d'erreurs.

Dans un mode particulier de mise en oeuvre, les erreurs spatiales sont estimées de façon récursive, paire de satellites par paire de satellites ou groupe de paires de satellites par groupe de paires de satellites.

Dans un mode particulier de mise en oeuvre, lorsque Ns satellites organisés en Np paires se trouvent simultanément dans le champ de vue radioélectrique de l'engin, les erreurs spatiales pour chacune des directions d'incidence respectives desdits Ns satellites par rapport à l'engin sont estimées simultanément en fonction des écarts angulaires inter-satellites théoriques et des écarts angulaires inter-satellites estimés déterminés pour lesdites Np paires de satellites.

Dans un mode particulier de mise en oeuvre, de nouvelles paires de satellites sont considérées au cours du temps à mesure que des satellites entrent dans le champ de vue radioélectrique de l'engin.

Dans un mode particulier de mise en oeuvre, une même paire de satellites est considérée plusieurs fois au cours du temps.

Selon un second aspect, l'invention concerne un procédé d'estimation d'attitude d'un engin en fonction de mesures de différences de phases de signaux radioélectriques reçus par au moins trois antennes de réception non alignées de l'engin. Ledit procédé d'estimation d'attitude comporte également la calibration d'erreurs spatiales conformément à l'invention.

Selon un troisième aspect, l'invention concerne un produit programme d'ordinateur comportant un ensemble d'instructions de code de programme qui, lorsqu'elles sont exécutées par un ou plusieurs processeur, mettent en oeuvre un procédé de calibration d'erreurs spatiales ou un procédé d'estimation d'attitude conformément à l'invention.

Selon un quatrième aspect, l'invention concerne un système d'estimation d'attitude d'un engin en fonction de mesures de différences de phases de signaux radioélectriques reçus par au moins trois antennes de réception non alignées de l'engin. Ledit système d'estimation d'attitude comporte en outre des moyens configurés pour calibrer les erreurs spatiales conformément à l'invention.

Dans un mode particulier de réalisation du système d'estimation d'attitude, les trois antennes de réception sont des antennes de récepteurs d'un système global de navigation par satellites, par exemple des récepteurs GPS ou des récepteurs Galileo.

Selon un cinquième aspect, l'invention concerne un engin spatial comportant un système d'estimation d'attitude conforme à l'invention.

Dans un mode particulier de réalisation, l'engin spatial comporte un corps comportant plusieurs faces externes sensiblement planes, et les trois antennes de réception sont agencées sur une même face externe dudit corps.

**EP 2 831 616 B1**

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un engin spatial et de satellites en orbite autour de la Terre,
- Figure 2 : une représentation schématique d'une vue rapprochée de l'engin spatial de la figure 1,
- Figure 3 : un diagramme illustrant les principales étapes d'un exemple de mise en oeuvre d'un procédé de calibration d'erreurs spatiales,
- Figure 4 : une représentation schématique d'une vue rapprochée de l'engin spatial illustrant l'expression d'une direction d'un satellite par rapport audit engin spatial, dans un repère fixe par rapport audit engin spatial,
- Figure 5 : une représentation schématique d'un champ de vue radioélectrique de l'engin spatial,
- Figure 6 : une représentation schématique d'une partition particulière du champ de vue radioélectrique de l'engin spatial.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

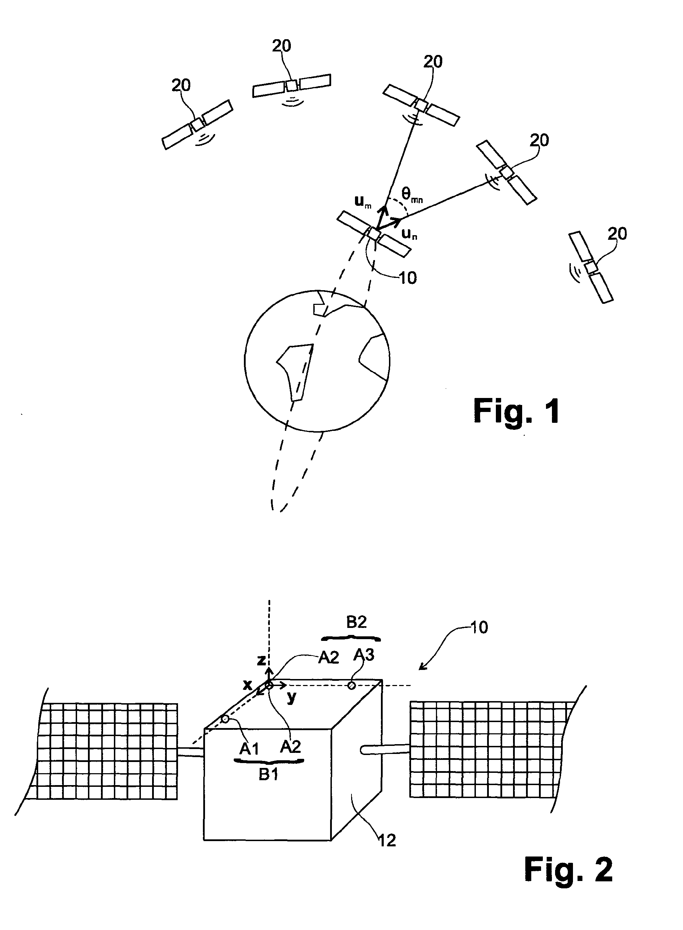

La figure 1 représente schématiquement un engin 10 spatial, dont on cherche à estimer l'attitude, et des satellites 20 en orbite autour de la Terre.
Par exemple, l'engin 10 spatial est en orbite basse (LEO pour « Low Earth Orbit ») autour de la Terre.
Dans la suite de la description, on se place de manière non limitative dans le cas où les satellites 20 sont des satellites d'un système global de navigation par satellites (GNSS pour « Global Navigation Satellite System »), tel qu'un système GPS et/ou Galileo, etc.
Plus particulièrement, on considère de manière non limitative des satellites 20 GPS. De tels satellites 20 GPS sont en orbite circulaire autour de la Terre, à une altitude approximative de 20000 kilomètres.
La figure 1 représente également les directions respectives de deux satellites 20 GPS par rapport à l'engin 10 spatial, lesquelles sont représentées par des vecteurs respectivement $\mathbf{u_m}$ et $\mathbf{u_n}$. L'angle $\theta_{mn}$ entre lesdites directions $\mathbf{u_m}$ et $\mathbf{u}_n$ correspond à l'écart angulaire inter-satellites de la paire formée par lesdits deux satellites 20 GPS.
La figure 2 représente schématiquement une vue rapprochée de l'engin 10 spatial. Tel qu'illustré par cette figure, l'engin 10 spatial comporte un corps 12 comportant plusieurs faces externes sensiblement planes. Par exemple, le corps 12 est sensiblement en forme de cube.
L'engin 10 spatial comporte également trois antennes de réception non alignées, respectivement A1, A2 et A3, adaptées à recevoir des signaux radioélectriques émis par les satellites 20 GPS. Rien n'exclut, suivant d'autres exemples, de considérer un nombre plus important d'antennes de réception A1, A2, A3 pour estimer l'attitude dudit engin 10 spatial. Toutefois, il est nécessaire d'avoir au moins trois antennes de réception non alignées pour pouvoir estimer l'attitude dudit engin 10 spatial suivant trois axes.
Les trois antennes de réception A1, A2, A3 appartiennent à des récepteurs GPS. Ces récepteurs GPS peuvent être complètement distincts ou partager certains moyens, comme par exemple des moyens de calcul adaptés à déterminer la position de l'engin 10 en fonction des signaux radioélectriques reçus sur l'une quelconque desdites trois antennes de réception A1, A2, A3.
De préférence, et tel qu'illustré par la figure 2, les trois antennes de réception A1, A2, A3 sont agencées sur une même face externe dudit corps. De la sorte, il est possible de maximiser un champ de vue radioélectrique commun auxdites trois antennes de réception. Ceci permet de maximiser le nombre de satellites 20 GPS se trouvant simultanément dans les champs de vues radioélectriques desdites trois antennes de réception. Dans la suite, on désigne par « champ de vue radioélectrique de l'engin spatial » le champ de vue radioélectrique commun aux trois antennes de réception A1, A2, A3.
Les trois antennes de réception A1, A2, A3 sont organisées en deux bases de réception : une première base de réception B1 formée par les antennes de réception A1 et A2, et une seconde base de réception B2 formée par les antennes de réception A2 et A3. Il est à noter que rien n'exclut, suivant d'autres exemples, de considérer également une troisième base de réception formée par les antennes de réception A1 et A3.
De manière nullement limitative, on se place dans le cas où les deux bases de réception B1, B2 sont sensiblement orthogonales.
Dans tout le contexte de la présente demande, on désigne par « direction d'incidence » d'un satellite 20 GPS l'expression de la direction de ce satellite GPS par rapport à l'engin 10 spatial dans un repère fixe par rapport audit engin spatial. Les directions $\mathbf{u_m}$ et $\mathbf{u}_n$ peuvent en effet être exprimées dans un repère quelconque ; lorsqu'elles sont

5

exprimées dans un repère fixe par rapport à l'engin 10 spatial, elles sont désignées respectivement par $\mathbf{v}_m$ et $\mathbf{v}_n$. On comprend que seules les directions d'incidence $\mathbf{v}_m$ et $\mathbf{v}_n$ des satellites 20 GPS par rapport à l'engin 10 spatial englobent une information sur l'orientation de l'engin 10 spatial par rapport aux satellites 20 GPS, information qui permet, combinée aux positions absolues respectives de l'engin 10 et des satellites 20 GPS, d'estimer l'attitude de l'engin.

La figure 2 illustre un exemple de repère fixe par rapport à l'engin 10 spatial, dit « repère engin », dans lequel les directions d'incidence des différents satellites 20 GPS seront exprimées dans la suite de la description. Tel qu'illustré par la figure 2, le repère engin est sensiblement centré sur l'antenne de réception A2, et est défini par trois vecteurs unitaires x, y et z orthogonaux entre eux. Le vecteur x est sensiblement colinéaire avec les centres de phase des antennes de réception A1, A2 de la base de réception B1, et le vecteur y est sensiblement colinéaire avec les centres de phase des antennes de réception A2, A3 de la base de réception B2.

Tel qu'indiqué précédemment, la présence d'éléments réfléchissants et/ou diffractants à proximité des trois antennes de réception A1, A2, A3 fait que les signaux radioélectriques reçus sur chacune desdites trois antennes de réception présenteront des composantes indirectes plus ou moins importantes. Lesdites composantes indirectes sont à l'origine de biais de phase qui dépendent d'une direction d'incidence des signaux radioélectriques par rapport à l'engin 10 spatial, et lesdits biais de phase introduisent des erreurs spatiales dans l'estimation de l'attitude dudit engin 10 spatial.

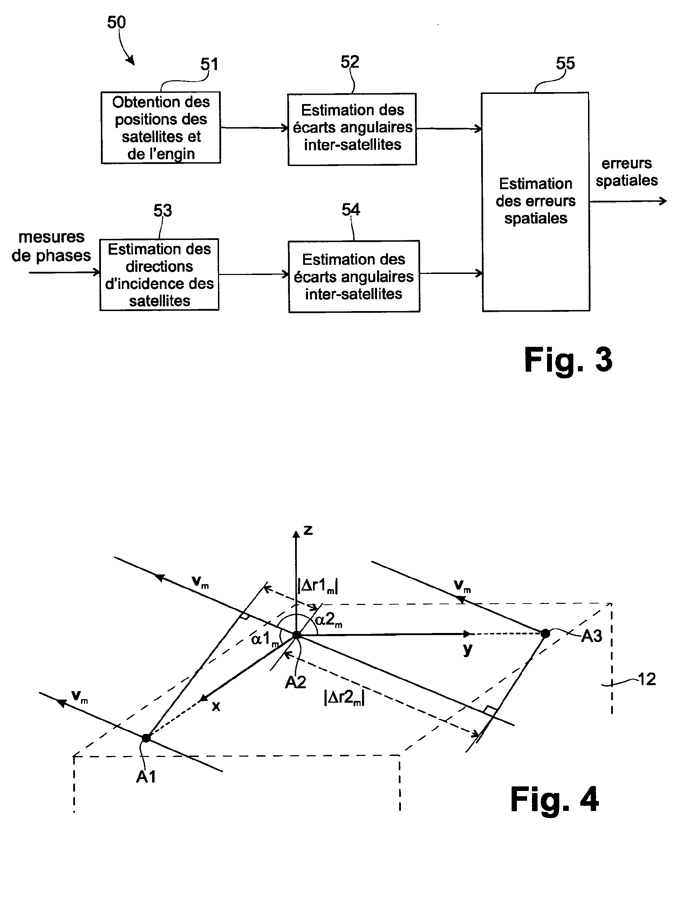

La figure 3 représente les principales étapes d'un exemple de mise en oeuvre d'un procédé 50 de calibration d'erreurs spatiales, lesquelles sont :

- 51 obtention de positions respectives de l'engin 10 spatial et de Ns satellites 20 GPS se trouvant à un instant donné dans le champ de vue radioélectrique de l'engin spatial, les Ns satellites GPS étant organisés en Np paires,
- 52 estimation d'écarts angulaires inter-satellites respectifs des Np paires de satellites 20 GPS en fonction des positions respectives de l'engin 10 et des Ns satellites GPS, de sorte à obtenir des écarts angulaires inter-satellites dits « théoriques »,
- 53 estimation de directions d'incidence respectives des Ns satellites 20 GPS par rapport à l'engin 10 spatial en fonction de mesures de phase de signaux radioélectriques reçus desdits satellites GPS par les trois antennes de réception A1, A2, A3 de l'engin 10 spatial,
- 54 estimation des écarts angulaires inter-satellites respectifs des Np paires de satellites 20 GPS en fonction des directions d'incidence respectives des Ns satellites GPS par rapport à l'engin 10 spatial, de sorte à obtenir des écarts angulaires inter-satellites dits « estimés »,
- 55 estimation des erreurs spatiales pour chacune des directions d'incidence respectives des Ns satellites 20 GPS par rapport à l'engin 10 spatial en fonction desdits écarts angulaires inter-satellites théoriques et desdits écarts angulaires inter-satellites estimés calculés pour lesdites Np paires de satellites 20 GPS.

Ainsi, la calibration des erreurs spatiales repose sur l'estimation des écarts angulaires inter-satellites respectifs des Np paires de satellites 20 GPS de deux façons différentes de sorte à obtenir :

- des écarts angulaires inter-satellites théoriques indépendants des erreurs spatiales,
- des écarts angulaires inter-satellites estimés affectés par lesdites erreurs spatiales.

Obtention des positions des satellites GPS et de l'engin spatial

De manière connue, les satellites 20 GPS incorporent des informations de navigation dans les signaux radioélectriques qu'ils émettent.

Lesdites informations de navigation comprennent notamment, pour chaque signal radioélectrique émis par un satellite 20 GPS, la position de ce satellite 20 GPS ainsi que l'heure d'émission dudit signal radioélectrique.

Ainsi, l'engin 10 spatial, équipé d'un récepteur GPS, obtient directement les positions respectives des Ns satellites 20 GPS dans lesdites informations de navigation, et peut déterminer de manière conventionnelle sa position à partir desdites informations de navigation.

Détermination des écarts angulaires inter-satellites théoriques

Dans la suite de la description, on suppose, afin de simplifier les équations, que les positions respectives des Ns satellites 20 GPS et de l'engin 10 spatial, en fonction desquelles les écarts angulaires inter-satellites théoriques sont déterminés, sont obtenues sans erreurs.

En pratique, il a été vérifié que la précision desdites positions permet d'avoir en théorie une erreur sur l'estimation des écarts angulaires inter-satellites de l'ordre de 10e-04 degrés, ce qui est négligeable par rapport à la précision visée pour l'estimation de l'attitude de l'engin 10 spatial, qui est de l'ordre de 0.1 degrés.

Tel qu'illustré par la figure 2, l'écart angulaire inter-satellites entre deux satellites de directions respectivement

$u_m$ et $u_n$ correspond à un angle $\theta_{mn}$ entre lesdites directions $u_m$ et $u_n$.

Par exemple, les directions $u_m$ et $u_n$ sont estimées en fonction des positions des satellites 20 GPS considérés et de l'engin 10 spatial. Dans la suite de la description, on se place de manière non limitative dans le cas où l'écart angulaire inter-satellites $\theta_{mn}$ est estimé sous la forme du produit scalaire $u_m \cdot u_n$, ce qui revient à estimer en pratique $\cos(\theta_{mn})$ lorsque les directions $u_m$ et $u_n$ sont des vecteurs unitaires.

Les positions respectives de l'engin 10 spatial et des satellites 20 GPS sont par exemple obtenues dans un repère fixe centré sur la Terre. Dans ce repère fixe centré sur la Terre, on désigne par :

- $(x_R, y_R, z_R)$ les coordonnées de l'engin 10 spatial,
- $(x_m, y_m, z_m)$ les coordonnées du satellite 20 GPS de direction $u_m$,
- $(x_n, y_n, z_n)$ les coordonnées du satellite 20 GPS de direction $u_n$.

Dans ce cas, les directions $u_m$ et $u_n$ sont par exemple déterminées selon les expressions suivantes :

$$u_m = \frac{1}{P_m} \cdot (x_m - x_R, \quad y_m - y_R, \quad z_m - z_R)$$

$$u_n = \frac{1}{P_n} \cdot (x_n - x_R, \quad y_n - y_R, \quad z_n - z_R)$$

expressions dans lesquelles $P_m$ et $P_n$ sont des coefficients de normalisation.

Puis l'écart angulaire inter-satellites théorique entre les satellites 20 GPS de directions $u_m$ et $u_n$ est déterminé sous la forme du produit scalaire $u_m \cdot u_n$ qui est égal à :

$$u_m \cdot u_n = \frac{(x_m - x_R) \cdot (x_n - x_R) + (y_m - y_R) \cdot (y_n - y_R) + (z_m - z_R) \cdot (z_n - z_R)}{P_m \cdot P_n}$$

Estimation des directions d'incidence en fonction de mesures de phase

Tel qu'indiqué précédemment, on entend par « estimer la direction d'incidence » d'un satellite 20 GPS le fait d'estimer la direction de ce satellite GPS par rapport à l'engin 10 spatial dans un repère fixe par rapport audit engin spatial, tel que le repère engin.

La figure 4 représente de manière plus détaillée la direction d'incidence $v_m$ dans le repère engin, afin d'expliquer comment ladite direction d'incidence $v_m$ peut être estimée.

Tel qu'illustré par la figure 4, la direction d'incidence $v_m$ fait un angle $\alpha 1_m$ avec le vecteur x du repère engin, et un angle $\alpha 2_m$ avec le vecteur y dudit repère engin. On se place en outre de manière nullement limitative dans le cas où les deux bases de réception B1, B2 sont de même longueur b (non illustrée par les figures).

Par conséquent, on a $\cos(\alpha 1_m) = \Delta r 1_m / b$ et $\cos(\alpha 2_m) = \Delta r 2_m / b$, expressions dans lesquelles :

- $\Delta r 1_m$ est la différence de marche des signaux radioélectriques reçus dans la direction d'incidence $v_m$ par les antennes de réception A1, A2 de la base de réception B1,
- $\Delta r 2_m$ est la différence de marche des signaux radioélectriques reçus dans la direction d'incidence $v_m$ par les antennes de réception A2, A3 de la base de réception B2.

Il est à noter que, dans ces expressions, $\Delta r 1_m$ (respectivement $\Delta r 2_m$) est négatif dès lors que $\alpha 1_m$ (respectivement $\alpha 2_m$) est supérieur à $\pi/2$.

La direction d'incidence $v_m$ s'exprime par exemple :

$$v_m = \left( \frac{\Delta r 1_m}{b}, \quad \frac{\Delta r 2_m}{b}, \quad \sqrt{1 - \left(\frac{\Delta r 1_m}{b}\right)^2 - \left(\frac{\Delta r 2_m}{b}\right)^2} \right)$$

Dans cette expression, la longueur b est connue.

En outre, et de manière connue de l'homme de l'art, il est possible de déterminer une différence de marche des signaux radioélectriques reçus par les deux antennes de réception d'une base de réception B1, B2 en fonction de la différence des phases mesurées sur lesdites deux antennes de réception.

Il est à noter qu'une ambiguïté peut se produire du fait que, la phase étant mesurée modulo $2\pi$, la différence de marche est estimée modulo la longueur d'onde des signaux radioélectriques reçus. Toutefois, il existe des procédés, considérés comme connus de l'homme de l'art, pour lever l'ambiguïté sur la différence de marche (voir par exemple FR 2926891).

Par conséquent, une estimation $\mathbf{ve}_m$ de la direction d'incidence $\mathbf{v}_m$ peut être obtenue en estimant les différences de marche $\Delta r1_m$ et $\Delta r2_m$ par des procédés considérés comme connus de l'homme de l'art.

Détermination des écarts angulaires inter-satellites estimés

Les écarts angulaires inter-satellites estimés sont déterminés en fonction des estimations $\mathbf{ve}_k$ ($1 \leq k \leq Ns$) des directions d'incidence $\mathbf{v}_k$ des Ns satellites 20 GPS par rapport à l'engin 10 spatial.

Par exemple, des estimations $\mathbf{ve}_m$ et $\mathbf{ve}_n$ des directions d'incidence respectivement $\mathbf{v}_m$ et $\mathbf{v}_n$ sont déterminées, par exemple tel que décrit précédemment, et l'écart angulaire inter-satellite estimé correspondant est déterminé sous la forme du produit scalaire $\mathbf{ve}_m \cdot \mathbf{ve}_n$.

Estimation des erreurs spatiales

Dans la suite de la description, on se place dans le cas où les erreurs spatiales sont estimées, pour chaque base de réception B1, B2, sous la forme d'une erreur sur une différence de marche des signaux radioélectriques.

En effet, bien que les biais de phase varient d'une antenne de réception à une autre, c'est bien la différence de phase entre deux antennes de réception qui est utilisée pour estimer la différence de marche, elle-même utilisée pour estimer l'attitude de l'engin 10 spatial. Ainsi, les erreurs spatiales induites par lesdits biais de phase peuvent tout à fait être estimées, pour chaque base de réception B1, B2, sous la forme d'une erreur sur une différence de marche ou sur une différence de phase entre les signaux radioélectriques reçus par les deux antennes de réception de la base de réception considérée.

On établit ci-après un exemple de relation linéaire pouvant être utilisée pour estimer les erreurs spatiales en fonction des écarts angulaires inter-satellites théoriques et des écarts angulaires inter-satellites estimés.

Plus particulièrement, on considère dans cet exemple une paire de satellites 20 GPS de directions respectives $\mathbf{u}_m$ et $\mathbf{u}_n$ (directions d'incidence $\mathbf{v}_m$ et $\mathbf{v}_n$ dans le repère engin), et on établit une relation linéaire entre les paramètres suivants :

- une différence $\Delta Y_{mn}$ entre l'écart angulaire inter-satellites théorique et l'écart angulaire inter-satellites estimé déterminés pour ladite paire de satellites, en d'autres termes :

$$\Delta Y_{mn} = \mathbf{ve}_m \cdot \mathbf{ve}_n - \mathbf{u}_m \cdot \mathbf{u}_n = \mathbf{ve}_m \cdot \mathbf{ve}_n - \mathbf{v}_m \cdot \mathbf{v}_n$$

- un vecteur $\delta_{mn}$ comportant les erreurs spatiales pour chaque base de réception B1, B2 et chaque direction d'incidence $\mathbf{v}_m$ et $\mathbf{v}_n$.

Plus particulièrement, on se place dans cet exemple dans le cas où le vecteur $\delta_{mn}$ est exprimé sous la forme suivante :

$$\boldsymbol{\delta}_{mn} = \begin{pmatrix} \delta r_m^{B2} & \delta r_m^{B1} & \delta r_n^{B2} & \delta r_n^{B1} \end{pmatrix}^T$$

expression dans laquelle :

- $\delta r_m^{B2}$ est l'erreur sur la différence de marche pour la base de réception B2 dans la direction d'incidence $\mathbf{v}_m$,
- $\delta r_m^{B1}$ est l'erreur sur la différence de marche pour la base de réception B1 dans la direction d'incidence $\mathbf{v}_m$,
- $\delta r_n^{B2}$ est l'erreur sur la différence de marche pour la base de réception B2 dans la direction d'incidence $\mathbf{v}_n$,
- $\delta r_n^{B1}$ est l'erreur sur la différence de marche pour la base de réception B1 dans la direction d'incidence $\mathbf{v}_n$.

On note à ce stade que :

- une erreur uniquement sur la différence de marche de la base de réception B2 (c'est-à-dire $\delta r^{B1}_k = 0$) correspond à une rotation autour de l'axe du repère engin de vecteur **x,**
- une erreur uniquement sur la différence de marche de la base de réception B1 (c'est-à-dire $\delta r^{B2}_k = 0$) correspond à une rotation autour de l'axe du repère engin de vecteur **y.**

Par conséquent, il est possible d'exprimer les directions d'incidences $\mathbf{v}_m$ et $\mathbf{v}_n$ comme étant obtenues, à partir de leurs estimations respectivement $\mathbf{ve}_m$ et $\mathbf{ve}_n$, par rotations successives autour des axes du repère engin de vecteurs **x** et **y.**

Pour la direction d'incidence $\mathbf{v}_k$ et son estimée $\mathbf{ve}_k$, k égal à m ou n, cela revient à avoir $\mathbf{v}_k = \mathbf{M}_k \cdot \mathbf{ve}_k$, avec :

$$\mathbf{M}_k = \begin{pmatrix} 1 & 0 & 0 \\ 0 & 1 & -\varepsilon x_k \\ 0 & \varepsilon x_k & 1 \end{pmatrix} \cdot \begin{pmatrix} 1 & 0 & \varepsilon y_k \\ 0 & 1 & 0 \\ -\varepsilon y_k & 0 & 1 \end{pmatrix}$$

expression dans laquelle $\varepsilon x_k$ et $\varepsilon y_k$ (k égal à m ou n) correspondent aux angles de rotation autour des axes du repère engin de vecteurs respectivement **x** et **y,** angles de rotation qui sont considérés comme faibles de sorte que $\cos(\varepsilon x_k)$ et $\cos(\varepsilon y_k)$ sont sensiblement égaux à respectivement $\varepsilon x_k$ et $\varepsilon y_k$, et de sorte que $\sin(\varepsilon x_k)$ et $\sin(\varepsilon y_k)$ sont sensiblement égaux à 1.

On peut également négliger les termes de second ordre de sorte à obtenir la relation suivante :

$$\mathbf{M}_k \approx \begin{pmatrix} 1 & 0 & \varepsilon y_k \\ 0 & 1 & -\varepsilon x_k \\ -\varepsilon y_k & \varepsilon x_k & 1 \end{pmatrix}$$

En remplaçant, dans l'expression de la différence $\Delta Y_{mn}$, les directions d'incidence $\mathbf{v}_m$ et $\mathbf{v}_n$ par respectivement $\mathbf{M}_m \cdot \mathbf{ve}_m$ et $\mathbf{M}_n \cdot \mathbf{ve}_n$, on obtient une relation du type :

$$\Delta Y_{mn} = \begin{pmatrix} ve_{mx} \cdot ve_{ny} - ve_{my} \cdot ve_{nz} \\ -ve_{mz} \cdot ve_{nx} + ve_{mx} \cdot ve_{nz} \\ -ve_{mz} \cdot ve_{ny} + ve_{my} \cdot ve_{nz} \\ ve_{mz} \cdot ve_{nx} - ve_{mx} \cdot ve_{nz} \end{pmatrix}^T \cdot \begin{pmatrix} \varepsilon x_m \\ \varepsilon y_m \\ \varepsilon x_n \\ \varepsilon y_n \end{pmatrix} + o(\varepsilon) = \mathbf{a}(\mathbf{ve}_m, \mathbf{ve}_n) \cdot \begin{pmatrix} \varepsilon x_m \\ \varepsilon y_m \\ \varepsilon x_n \\ \varepsilon y_n \end{pmatrix} + o(\varepsilon)$$

expression dans laquelle $o(\varepsilon)$ correspond aux termes de second ordre. En négligeant ces termes de second ordre, on obtient :

$$\Delta Y_{mn} \approx \mathbf{a}(\mathbf{ve}_m, \mathbf{ve}_n) \cdot \begin{pmatrix} \varepsilon x_m \\ \varepsilon y_m \\ \varepsilon x_n \\ \varepsilon y_n \end{pmatrix}$$

Pour la base de réception B2, si on désigne par $\Delta re2_k$ l'estimée de la différence de marche $\Delta r2_k$, on a :

$$\delta r^{B2}_k = \Delta re2_k - \Delta r2_k = b \cdot \mathbf{ve}_k \cdot \mathbf{y} - b \cdot \mathbf{v}_k \cdot \mathbf{y}$$

Du fait que l'erreur $\delta r^{B2}_k$ ne dépend pas de l'angle de rotation $\varepsilon y_k$, on peut écrire :

$$\delta r^{B2}_k = \left( \mathbf{ve}_k - \begin{pmatrix} 1 & 0 & 0 \\ 0 & 1 & -\varepsilon x_k \\ 0 & \varepsilon x_k & 1 \end{pmatrix} \cdot \mathbf{ve}_k \right) \cdot b \cdot \mathbf{y} = \begin{pmatrix} 0 & 0 & 0 \\ 0 & 0 & b \cdot \varepsilon x_k \\ 0 & -b \cdot \varepsilon x_k & 0 \end{pmatrix} \cdot \mathbf{ve}_k \cdot \mathbf{y}$$

Par conséquent, on obtient :

$$\delta r^{B2}_k = b \cdot \varepsilon x_k \cdot ve_{kz}.$$

De manière analogue, on obtient pour $\delta r^{B1}_k$ l'expression suivante :

$$\delta r^{B1}_k = -b \cdot \varepsilon y_k \cdot ve_{kz}.$$

D'après l'expression ci-dessus de la différence $\Delta Y_{mn}$, on a la relation suivante :

$$\Delta Y_{mn} = \frac{1}{b} \cdot \begin{pmatrix} ve_{mx} \cdot ve_{ny} - ve_{my} \cdot ve_{nz} \\ -ve_{mz} \cdot ve_{nx} + ve_{mx} \cdot ve_{nz} \\ -ve_{mz} \cdot ve_{ny} + ve_{my} \cdot ve_{nz} \\ ve_{mz} \cdot ve_{nx} - ve_{mx} \cdot ve_{nz} \end{pmatrix}^T \cdot \begin{pmatrix} \dfrac{\delta r^{B2}_m}{ve_{mz}} \\ -\dfrac{\delta r^{B1}_m}{ve_{mz}} \\ \dfrac{\delta r^{B2}_n}{ve_{nz}} \\ -\dfrac{\delta r^{B1}_n}{ve_{nz}} \end{pmatrix}$$

c'est-à-dire :

$$\Delta Y_{mn} = \frac{1}{b} \cdot \begin{pmatrix} \dfrac{ve_{mx} \cdot ve_{ny} - ve_{my} \cdot ve_{nz}}{ve_{mz}} \\ \dfrac{ve_{mz} \cdot ve_{nx} - ve_{mx} \cdot ve_{nz}}{ve_{mz}} \\ \dfrac{-ve_{mz} \cdot ve_{ny} + ve_{my} \cdot ve_{nz}}{ve_{nz}} \\ \dfrac{-ve_{mz} \cdot ve_{nx} + ve_{mx} \cdot ve_{nz}}{ve_{nz}} \end{pmatrix}^T \cdot \begin{pmatrix} \delta r^{B2}_m \\ \delta r^{B1}_m \\ \delta r^{B2}_n \\ \delta r^{B1}_n \end{pmatrix}$$

Sur la base de la relation précédente, donnée à titre d'exemple non limitatif, on comprend que tout algorithme connu de l'homme de l'art peut être mis en oeuvre pour estimer les erreurs spatiales à partir de la différence entre d'une part les écarts angulaires inter-satellites théoriques et, d'autre part, les écarts angulaires inter-satellites estimés. La relation précédente relie une observation scalaire (différence $\Delta Y_{mn}$) à quatre paramètres à estimer (erreurs spatiales $\delta r^{B2}_m$, $\delta r^{B1}_m$, $\delta r^{B2}_n$, $\delta r^{B1}_n$). Elle peut par exemple être implémentée dans un algorithme d'estimation récursif (moindres carrés récursifs, filtre de Kalman, etc.). Dans ce cas, il est possible d'exécuter l'étape 55 d'estimation des erreurs spatiales paire de satellites 20 GPS par paire de satellites GPS (ou de considérer à chaque itération des groupes différents de paires de satellites).

**EP 2 831 616 B1**

Il est à noter que, au cours du temps, des satellites 20 GPS peuvent entrer ou sortir du champ de vue radioélectrique de l'engin 10. Ainsi, à mesure que des satellites 20 GPS entrent dans le champ de vue radioélectrique de l'engin 10, ceux-ci peuvent être considérés au sein de paires pour la calibration des erreurs spatiales pour les directions d'incidence de ces satellites 20 GPS.

En outre, les directions d'incidence d'une même paire de satellites 20 GPS se trouvant dans le champ de vue radioélectrique de l'engin 10 vont varier au cours du temps, du fait du défilement de l'engin 10 en orbite LEO. Une même paire de satellites 20 GPS peut donc être considérée plusieurs fois au cours du temps pour estimer les erreurs spatiales pour des directions d'incidence différentes.

De manière plus générale, on comprend donc que le procédé 50 de calibration réalise avantageusement, dans des modes particuliers de mise en oeuvre, un filtrage temporel pour estimer les erreurs spatiales en fonction non seulement des observations à un instant donné, mais également en fonction d'observations antérieures. Un tel filtrage temporel est notamment inhérent aux algorithmes d'estimation récursifs. Plusieurs implémentations sont possibles pour la prise en compte de telles observations réalisées à des instants différents, et on comprend que le choix d'une implémentation particulière ne constitue qu'une variante de l'invention parmi d'autres. Suivant un exemple non limitatif, les étapes du procédé 50 de calibration d'erreurs spatiales peuvent être itérées à chaque fois qu'une nouvelle paire de satellites 20 GPS a été détectée. De préférence, l'étape 55 d'estimation des erreurs spatiales met dans ce cas en oeuvre un filtre de Kalman.

Il est à noter que rien n'exclut d'estimer des erreurs spatiales pour chaque direction d'incidence des satellites 20 GPS se trouvant, au fil du temps et des défilements respectifs desdits satellites GPS et de l'engin spatial au-dessus de la surface de la Terre, dans le champ de vue radioélectrique de l'engin 10 spatial.

Dans des modes particuliers de mise en oeuvre, les erreurs spatiales sont estimées sous la forme d'un modèle paramétrique dont les paramètres sont estimés en fonction d'écarts angulaires inter-satellites théoriques et d'écarts angulaires inter-satellites estimés calculés pour différentes paires de satellites 20 GPS.

Dans un exemple préféré de mise en oeuvre, les erreurs spatiales sont, dans le modèle paramétrique, constantes par morceaux. En d'autres termes, le champ de vue radioélectrique de l'engin 10 spatial est préalablement partitionné en une pluralité de cônes distincts d'incidence de signaux radioélectriques par rapport à l'engin 10, et les erreurs spatiales sont considérées comme étant les mêmes pour toute direction d'incidence à l'intérieur d'un même cône d'incidence.

De la sorte, on peut n'estimer qu'une erreur spatiale par base de réception B1, B2 pour chaque cône d'incidence, ce qui permet de réduire le nombre de calculs à effectuer et/ou la quantité d'erreurs spatiales à mémoriser.

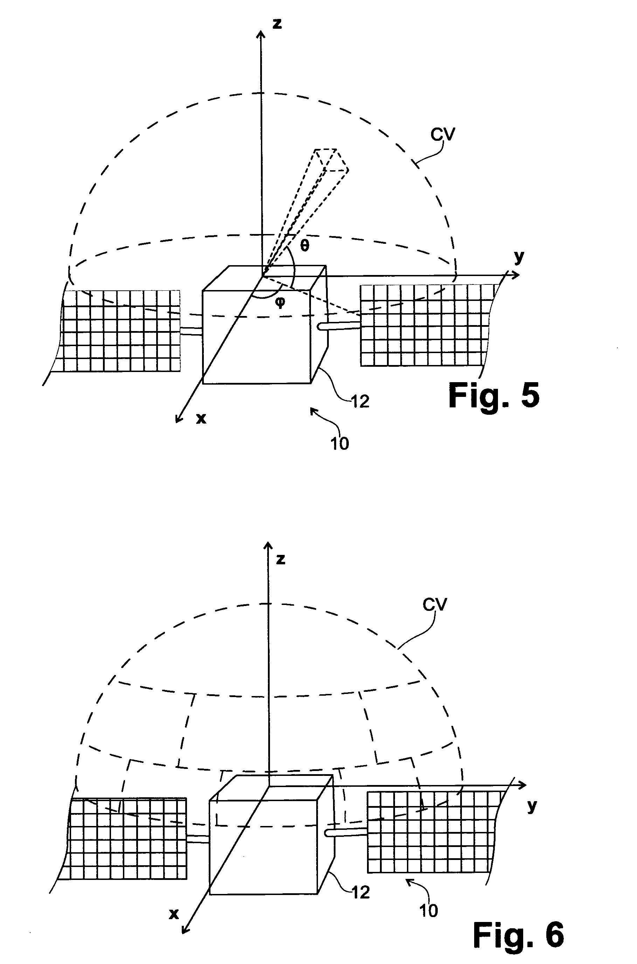

La figure 5 représente schématiquement le champ de vue radioélectrique (désigné par « CV ») de l'engin 10 spatial comme étant sensiblement semi-hémisphérique au-dessus d'un plan déterminé par les trois antennes de réception A1, A2, A3. La figure 5 représente également la convention adoptée de manière non limitative pour exprimer une direction d'incidence $\mathbf{v}_m$ sous la forme de deux angles d'incidence :

- un angle $\varphi$ d'azimut, choisi comme étant l'angle entre le vecteur x et la projection de la direction d'incidence $\mathbf{v}_m$ sur la plan déterminé par les trois antennes de réception A1, A2, A3,
- un angle $\theta$ d'élévation, choisi comme étant l'angle entre la direction d'incidence $\mathbf{v}_m$ et le plan déterminé par lesdites trois antennes de réception A1, A2, A3.

On peut par exemple définir un ensemble de cônes d'incidence adjacents, chacun desdits cônes d'incidence correspondant à une largeur de 5 degrés en azimut et 5 degrés en élévation.

Dans une partition particulièrement avantageuse du champ de vue radioélectrique CV de l'engin 10 spatial, les cônes d'incidence d'élévation faible par rapport à un plan déterminé par les trois antennes de réception A1, A2, A3 de l'engin 10 spatial sont d'angles solides respectifs inférieurs à ceux de cônes d'incidence d'élévation élevée par rapport audit plan.

Il a en effet été constaté que la composante indirecte est plus faible pour des directions d'incidence sensiblement normales (élévation élevée), par rapport au plan déterminé par les trois antennes de réception, que pour les directions d'incidence rasantes (élévation faible) par rapport audit plan.

De telles dispositions permettent d'avoir un pas d'échantillonnage spatial plus faible dans les zones où les erreurs spatiales varient beaucoup que dans les zones où lesdites erreurs spatiales varient peu.

La figure 6 représente schématiquement un exemple d'un tel champ de vue radioélectrique CV, dans lequel plus l'élévation $\theta$ est faible et plus la largeur des cônes d'incidence, à la fois en azimut et en élévation, est faible.

Il est à noter que rien n'exclut, suivant d'autres exemples, de considérer d'autres types de modèles paramétriques adaptés à modéliser les erreurs spatiales à partir d'un nombre fini de paramètres. Suivant un exemple non limitatif, les erreurs spatiales sont estimées sous la forme d'un modèle paramétrique dont les fonctions de base sont des harmoniques sphériques.

Le procédé 50 de calibration d'erreurs spatiales est avantageusement utilisé dans un procédé d'estimation

11

d'attitude de l'engin 10 spatial. Par exemple, les erreurs spatiales sont calibrées sous la forme d'erreurs sur une différence de marche des signaux radioélectriques pour chaque base de réception B1, B2. L'estimation d'attitude s'effectue par exemple en estimant des différences de marche en fonction de mesures de phase sur chacune des antennes de réception A1, A2, A3. Ensuite, les erreurs spatiales sont compensées sur lesdites différences de marche estimées, et l'attitude de l'engin 10 spatial est estimée en fonction des différences de marche obtenues après compensation selon tout algorithme d'estimation d'attitude connu de l'homme de l'art, par exemple au moyen d'un filtre de Kalman.

La présente invention concerne également un système d'estimation d'attitude de l'engin 10 spatial en fonction de mesures de phase de signaux radioélectriques reçus sur les trois antennes de réception A1, A2, A3.

Le système d'estimation d'attitude comporte notamment, outre des moyens conventionnels, des moyens configurés pour calibrer les erreurs spatiales conformément à l'invention. Ces moyens se présentent par exemple sous la forme d'une unité de traitement comportant au moins un processeur et une mémoire électronique dans laquelle est mémorisé un produit programme d'ordinateur, sous la forme d'un ensemble d'instructions de code de programme à exécuter par le processeur pour calibrer les erreurs spatiales et estimer l'attitude de l'engin 10. Dans une variante, l'unité de traitement du système d'estimation d'attitude comporte des circuits logiques programmables, de type FPGA, PLD, etc., et/ou circuits intégrés spécialisés (ASIC), configurés pour effectuer tout ou partie de la calibration des erreurs spatiales.

Il est à noter que le système d'estimation d'attitude est soit distribué entre l'engin 10 spatial et une station sol, soit entièrement embarqué dans ledit engin 10 spatial.

Il a été considéré ci-avant que les Ns satellites étaient des satellites d'un système global de navigation par satellites. Rien n'exclut, suivant d'autres exemples, de considérer d'autres types de satellites. Dans un tel cas, les positions respectives des Ns satellites et de l'engin peuvent être obtenues par tout moyen connu de l'homme de l'art. Par exemple, lesdites positions peuvent être estimées par une station sol et transmises à l'engin pour estimation des écarts angulaires inter-satellites théoriques.

En outre, il a été considéré ci-avant un engin 10 spatial. Rien n'exclut, suivant d'autres exemples de considérer un engin aérien ou tout objet pour lequel une estimation d'orientation pourrait être avantageuse.

De plus, l'invention a été décrite en considérant des signaux radioélectriques émis par des satellites. Rien n'exclut suivant d'autres exemples de considérer, en plus desdits satellites ou à la place desdits satellites, des émetteurs aériens ou terrestres. Par exemple, il est possible de considérer des signaux radioélectriques émis par des pseudolites terrestres.

La description ci-avant illustre clairement que par ses différentes caractéristiques et leurs avantages, la présente invention atteint les objectifs qu'elle s'était fixés. En particulier, la présente invention permet de calibrer, sans nécessiter de senseur d'attitude autre que les antennes de réception, les erreurs spatiales induites par des biais de phase affectant des mesures de phase de signaux radioélectriques reçus par lesdites antennes de réception.

## Revendications

1. Procédé (50) de calibration d'erreurs, dites « erreurs spatiales », induites par des biais de phase affectant des mesures de différences de phases de signaux radioélectriques reçus par au moins trois antennes de réception (A1, A2, A3) non alignées d'un engin (10), lesdits biais de phase dépendant d'une direction d'incidence des signaux radioélectriques par rapport à l'engin (10), **caractérisé en ce qu'**il comporte, pour une paire de satellites (20) se trouvant à un instant donné dans un champ de vue radioélectrique de l'engin (10), des étapes de :

   - (51) obtention de positions respectives de l'engin (10) et des satellites (20) de ladite paire,
   - (52) estimation d'un écart angulaire inter-satellites de ladite paire de satellites (20) en fonction des positions respectives de l'engin (10) et des satellites de ladite paire, de sorte à obtenir un écart angulaire inter-satellites dit « théorique »,
   - (53) estimation de directions d'incidence respectives des satellites (20) de ladite paire par rapport à l'engin (10) en fonction de mesures de phase de signaux radioélectriques reçus des satellites de ladite paire par les trois antennes de réception de l'engin (10),
   - (54) estimation de l'écart angulaire inter-satellite de ladite paire de satellites (20) en fonction des directions d'incidence respectives des satellites de ladite paire par rapport à l'engin (10), de sorte à obtenir un écart angulaire inter-satellites dit « estimé »,
   - (55) estimation des erreurs spatiales pour les directions d'incidence respectives des satellites (20) de ladite paire par rapport à l'engin (10) en fonction de l'écart angulaire inter-satellites théorique et de l'écart angulaire inter-satellites estimé déterminés pour ladite paire de satellites (20).

2. Procédé (50) selon la revendication 1, **caractérisé en ce que**, les erreurs spatiales sont estimées sous la forme d'un modèle paramétrique dont les paramètres sont estimés en fonction d'écarts angulaires inter-satellites théoriques et d'écarts angulaires inter-satellites estimés déterminés pour plusieurs paires de satellites (20).

3. Procédé (50) selon la revendication 2, **caractérisé en ce que** le champ de vue radioélectrique de l'engin (10) est préalablement partitionné en une pluralité de cônes distincts d'incidence de signaux radioélectriques par rapport à l'engin (10), et **en ce que** les erreurs spatiales sont considérées comme étant les mêmes pour toute direction d'incidence à l'intérieur d'un même cône d'incidence.

4. Procédé (50) selon la revendication 3, **caractérisé en ce que** les cônes d'incidence d'élévation faible par rapport à un plan déterminé par les centres de phase des trois antennes de réception (A1, A2, A3) de l'engin (10) sont d'angles solides respectifs inférieurs à ceux de cônes d'incidence d'élévation élevée par rapport audit plan.

5. Procédé (50) selon la revendication 2, **caractérisé en ce que** les erreurs spatiales sont estimées sous la forme d'un modèle paramétrique dont les fonctions de base sont des harmoniques sphériques.

6. Procédé (50) selon l'une des revendications précédentes, **caractérisé en ce que** les satellites appartiennent à un système global de navigation par satellites et les trois antennes de réception (A1, A2, A3) sont des antennes de récepteurs dudit système global de navigation par satellites, et **en ce que** les positions respectives des satellites (20) et de l'engin (10) sont déterminées à partir d'informations de navigation incluses dans les signaux radioélectriques reçus desdits satellites (20).

7. Procédé (50) selon l'une des revendications précédentes, **caractérisé en ce que** les erreurs spatiales sont estimées de façon récursive, paire de satellites (20) par paire de satellites (20) ou groupe de paires de satellites (20) par groupe de paires de satellites (20).

8. Procédé (50) selon l'une des revendications 1 à 6, **caractérisé en ce que**, Ns satellites organisés en Np paires se trouvant simultanément dans un champ de vue radioélectrique de l'engin (10), les erreurs spatiales pour chacune des directions d'incidence respectives des Ns satellites (20) par rapport à l'engin (10) sont estimées simultanément en fonction des écarts angulaires inter-satellites théoriques et des écarts angulaires inter-satellites estimés déterminés pour lesdites Np paires de satellites (20).

9. Procédé (50) selon l'une des revendications précédentes, **caractérisé en ce que** de nouvelles paires de satellites (20) sont considérées au cours du temps, à mesure que des satellites (20) entrent dans le champ de vue radioélectrique de l'engin (10) et/ou une même paire de satellites est considérée plusieurs fois au cours du temps.

10. Procédé d'estimation d'attitude d'un engin (10) en fonction de mesures de différences de phases de signaux radioélectriques reçus par au moins trois antennes de réception (A1, A2, A3) non alignées de l'engin (10), **caractérisé en ce que** ledit procédé comporte la calibration d'erreurs spatiales conformément à l'une des revendications précédentes, et la compensation desdites erreurs spatiales estimées lors de l'estimation de l'attitude de l'engin (10).

11. Produit programme d'ordinateur, **caractérisé en ce qu'**il comporte un ensemble d'instructions de code de programme qui, lorsqu'elles sont exécutées par un processeur, mettent en oeuvre un procédé selon l'une des revendications précédentes.

12. Système d'estimation d'attitude d'un engin (10) en fonction de mesures de différences de phases de signaux radioélectriques reçus par au moins trois antennes de réception (A1, A2, A3) non alignées de l'engin (10), **caractérisé en ce qu'**il comporte des moyens configurés pour calibrer des erreurs spatiales conformément à l'une des revendications 1 à 9.

13. Système d'estimation d'attitude selon la revendication 12, **caractérisé en ce que** les trois antennes de réception (A1, A2, A3) sont des antennes de récepteurs d'un système global de navigation par satellites.

14. Engin (10) spatial, **caractérisé en ce qu'**il comporte un système d'estimation d'attitude selon l'une des revendications 12 à 13.

15. Engin (10) spatial selon la revendication 14, **caractérisé en ce que**, ledit engin spatial comportant un corps (12) comportant plusieurs faces externes sensiblement planes, les trois antennes de réception (A1, A2, A3) sont agencées sur une même face externe dudit corps.

**Patentansprüche**

1. Verfahren (50) zur Kalibrierung von « Raumfehler » genannten Fehlern, die durch systematische Phasenfehler induziert werden, welche Messungen von Phasenunterschieden von Funksignalen beeinflussen, die von mindestens drei nicht fluchtend ausgerichteten Empfangsantennen (A1, A2, A3) eines Fahrzeugs (10) empfangen werden, wobei die systematischen Phasenfehler von einer Einfallsrichtung der Funksignale bezüglich des Fahrzeugs (10) abhängen, **dadurch gekennzeichnet, dass** es für ein Paar von Satelliten (20), die sich zu einem gegebenen Zeitpunkt in einem Funksichtfeld des Fahrzeugs (10) befinden, Schritte aufweist:

   - (51) des Erhalts von jeweiligen Positionen des Fahrzeugs (10) und der Satelliten (20) des Paars,
   - (52) der Schätzung einer Winkelabweichung zwischen Satelliten des Satellitenpaars (20) abhängig von den Positionen des Fahrzeugs (10) bzw. der Satelliten des Paars, um eine so genannte « theoretische » Winkelabweichung zwischen Satelliten zu erhalten,
   - (53) der Schätzung von jeweiligen Einfallsrichtungen der Satelliten (20) des Paars bezüglich des Fahrzeugs (10) abhängig von Phasenmessungen von durch die drei Empfangsantennen des Fahrzeugs (10) von den Satelliten des Paars empfangenen Funksignalen,
   - (54) der Schätzung der Winkelabweichung zwischen Satelliten des Satellitenpaars (20) abhängig von den jeweiligen Einfallsrichtungen der Satelliten des Paars bezüglich des Fahrzeugs (10), um eine so genannte « geschätzte » Winkelabweichung zwischen Satelliten zu erhalten,
   - (55) der Schätzung der Raumfehler für die jeweiligen Einfallsrichtungen der Satelliten (20) des Paars bezüglich des Fahrzeugs (10) abhängig von der für das Satellitenpaar (20) bestimmten theoretischen Winkelabweichung zwischen Satelliten und geschätzten Winkelabweichung zwischen Satelliten.

2. Verfahren (50) nach Anspruch 1, **dadurch gekennzeichnet, dass** die Raumfehler in Form eines parametrischen Modells geschätzt werden, dessen Parameter abhängig von theoretischen Winkelabweichungen zwischen Satelliten und von geschätzten Winkelabweichungen zwischen Satelliten geschätzt werden, die für mehrere Satellitenpaare (20) bestimmt werden.

3. Verfahren (50) nach Anspruch 2, **dadurch gekennzeichnet, dass** das Funksichtfeld des Fahrzeugs (10) vorab in eine Vielzahl von unterschiedlichen Einfallskegeln von Funksignalen bezüglich des Fahrzeugs (10) aufgeteilt wird, und dass die Raumfehler für jede Einfallsrichtung innerhalb des gleichen Einfallskegels als gleich angenommen werden.

4. Verfahren (50) nach Anspruch 3, **dadurch gekennzeichnet, dass** die Einfallskegel geringer Elevation bezüglich einer durch die Phasenzentren der drei Empfangsantennen (A1, A2, A3) des Fahrzeugs (10) bestimmten Ebene Raumwinkel haben, die kleiner sind als diejenigen von Einfallskegeln hoher Elevation bezüglich der Ebene.

5. Verfahren (50) nach Anspruch 2, **dadurch gekennzeichnet, dass** die Raumfehler in Form eines parametrischen Modells geschätzt werden, dessen Basisfunktionen Kugelflächenfunktionen sind.

6. Verfahren (50) nach einem der vorhergehenden Ansprüche, **dadurch gekennzeichnet, dass** die Satelliten zu einem globalen Satelliten-Navigationssystem gehören, und die drei Empfangsantennen (A1, A2, A3) Antennen von Empfängern des globalen Satelliten-Navigationssystems sind, und dass die Positionen der Satelliten (20) bzw. des Fahrzeugs (10) ausgehend von Navigationsinformationen bestimmt werden, die in den von den Satelliten (20) empfangenen Funksignalen enthalten sind.

7. Verfahren (50) nach einem der vorhergehenden Ansprüche, **dadurch gekennzeichnet, dass** die Raumfehler rekursiv, Satellitenpaar (20) für Satellitenpaar (20) oder Gruppe von Satellitenpaaren (20) für Gruppe von Satellitenpaaren (20), geschätzt werden.

8. Verfahren (50) nach einem der Ansprüche 1 bis 6, **dadurch gekennzeichnet, dass**, da in Np Paaren organisierte Ns Satelliten sich gleichzeitig in einem Funksichtfeld des Fahrzeugs (10) befinden, die Raumfehler für jede der Einfallsrichtungen der Ns Satelliten (20) bezüglich des Fahrzeugs (10) gleichzeitig abhängig von den theoretischen Winkelabweichungen zwischen Satelliten und den geschätzten Winkelabweichungen zwischen Satelliten geschätzt werden, die für die Np Satellitenpaare (20) bestimmt werden.

9. Verfahren (50) nach einem der vorhergehenden Ansprüche, **dadurch gekennzeichnet, dass** neue Satellitenpaare (20) im Laufe der Zeit berücksichtigt werden, in dem Maße, in dem Satelliten (20) in das Funksichtfeld des Fahrzeugs (10) eintreten, und/oder ein gleiches Satellitenpaar im Lauf der Zeit mehrfach berücksichtigt wird.

10. Verfahren zur Schätzung der Fluglage eines Fahrzeugs (10) abhängig von Phasendifferenzmessungen von Funksignalen, die von mindestens drei nicht fluchtend ausgerichteten Empfangsantennen (A1, A2, A3) des Fahrzeugs (10) empfangen werden, **dadurch gekennzeichnet, dass** das Verfahren die Kalibrierung von Raumfehlern nach einem der vorhergehenden Ansprüche und die Kompensation der bei der Schätzung der Fluglage des Fahrzeugs (10) geschätzten Raumfehler aufweist.

11. Computerprogrammprodukt, **dadurch gekennzeichnet, dass** es eine Einheit von Programmcodeanweisungen aufweist, die, wenn sie von einem Prozessor ausgeführt werden, ein Verfahren nach einem der vorhergehenden Ansprüche anwenden.

12. System zur Schätzung der Fluglage eines Fahrzeugs (10) abhängig von Phasendifferenzmessungen von Funksignalen, die von mindestens drei nicht fluchtend ausgerichteten Empfangsantennen (A1, A2, A3) des Fahrzeugs (10) empfangen werden, **dadurch gekennzeichnet, dass** es Einrichtungen aufweist, die konfiguriert sind, Raumfehler nach einem der Ansprüche 1 bis 9 zu kalibrieren.

13. Fluglagenschätzsystem nach Anspruch 12, **dadurch gekennzeichnet, dass** die drei Empfangsantennen (A1, A2, A3) Antennen von Empfängern eines globalen Satelliten-Navigationssystems sind.

14. Raumfahrzeug (10), **dadurch gekennzeichnet, dass dadurch gekennzeichnet, dass** es ein Fluglagenschätzsystem nach einem der Ansprüche 12 bis 13 aufweist.

15. Raumfahrzeug (10) nach Anspruch 14, **dadurch gekennzeichnet, dass**, da das Raumfahrzeug einen Körper (12) aufweist, der mehrere im Wesentlichen ebene Außenseiten aufweist, die drei Empfangsantennen (A1, A2, A3) auf der gleichen Außenseite des Körpers angeordnet sind.

**Claims**

1. A method (50) for calibrating errors, referred to as "spatial errors", induced by phase biases affecting measurements of phase differences of radioelectric signals received by at least three non-aligned reception antennas (A1, A2, A3) of a craft (10), said phase biases depending on a direction of incidence of the radioelectric signals with respect to the craft (10), **characterized in that** it comprises, for a pair of satellites (20) situated at a given instant in a radioelectric field of view of the craft (10), steps of:

- (51) obtaining of respective positions of the craft (10) and of the satellites (20) of said pair,
- (52) estimation of an inter-satellite angular distance of said pair of satellites (20) as a function of the respective positions of the craft (10) and of the satellites of said pair, so as to obtain a so-called "theoretical" inter-satellite angular distance,
- (53) estimation of respective directions of incidence of the satellites (20) of said pair with respect to the craft (10) as a function of phase measurements of radioelectric signals received from the satellites of said pair by the three reception antennas of the craft (10),
- (54) estimation of the inter-satellite angular distance of said pair of satellites (20) as a function of the respective directions of incidence of the satellites of said pair with respect to the craft (10), so as to obtain a so-called "estimated" inter-satellite angular distance,
- (55) estimation of the spatial errors for the respective directions of incidence of the satellites (20) of said pair with respect to the craft (10) as a function of the theoretical inter-satellite angular distance and of the estimated inter-satellite angular distance which are determined for said pair of satellites (20).

2. The method (50) as claimed in claim 1, **characterized in that** the spatial errors are estimated in the form of a parametric model whose parameters are estimated as a function of theoretical inter-satellite angular distances and of estimated inter-satellite angular distances determined for several pairs of satellites (20).

3. The method (50) as claimed in claim 2, **characterized in that** the radioelectric field of view of the craft (10) is previously partitioned into a plurality of distinct cones of incidence of radioelectric signals with respect to the craft (10), and **in that** the spatial errors are considered to be the same for any direction of incidence inside one and the same incidence cone.

**4.** The method (50) as claimed in claim 3, **characterized in that** the cones of incidence of low elevation with respect to a plane determined by the phase centers of the three reception antennas (A1, A2, A3) of the craft (10) are of smaller respective solid angles than those of cones of incidence of high elevation with respect to said plane.

**5.** The method (50) as claimed in claim 2, **characterized in that** the spatial errors are estimated in the form of a parametric model whose basis functions are spherical harmonics.

**6.** The method (50) as claimed in one of the preceding claims, **characterized in that** the satellites belong to a global satellite navigation system and the three reception antennas (A1, A2, A3) are antennas of receivers of said global satellite navigation system, and **in that** the respective positions of the satellites (20) and of the craft (10) are determined with the help of navigation information included in the radioelectric signals received from said satellites (20).

**7.** The method (50) as claimed in one of the preceding claims, **characterized in that** the spatial errors are estimated in a recursive manner, pair of satellites (20) by pair of satellites (20) or group of pairs of satellites (20) by group of pairs of satellites (20).

**8.** The method (50) as claimed in one of claims 1 to 6, **characterized in that**, Ns satellites organized into Np pairs being situated simultaneously in a radioelectric field of view of the craft (10), the spatial errors for each of the respective directions of incidence of the Ns satellites (20) with respect to the craft (10) are estimated simultaneously as a function of the theoretical inter-satellite angular distances and of the estimated inter-satellite angular distances determined for said Np pairs of satellites (20).

**9.** The method (50) as claimed in one of the preceding claims, **characterized in that** new pairs of satellites (20) are considered in the course of time, as satellites (20) enter the radioelectric field of view of the craft (10) and/or one and the same pair of satellites is considered several times in the course of time.

**10.** A method of estimating attitude of a craft (10) as a function of measurements of phase differences of radioelectric signals received by at least three non-aligned reception antennas (A1, A2, A3) of the craft (10), **characterized in that** said method comprises the calibration of spatial errors in accordance with one of the preceding claims, and the compensation of said spatial errors estimated during the estimation of the attitude of the craft (10).

**11.** A computer program product, **characterized in that** it comprises a set of program code instructions which, when they are executed by a processor, implement a method as claimed in one of the preceding claims.

**12.** A system for estimating attitude of a craft (10) as a function of measurements of phase differences of radioelectric signals received by at least three non-aligned reception antennas (A1, A2, A3) of the craft (10), **characterized in that** it comprises means configured to calibrate spatial errors as claimed in one of claims 1 to 9.

**13.** The attitude estimation system as claimed in claim 12, **characterized in that** the three reception antennas (A1, A2, A3) are antennas of receivers of a global satellite navigation system.

**14.** A spacecraft (10), **characterized in that** it comprises an attitude estimation system as claimed in one of claims 12 to 13.

**15.** The spacecraft (10) as claimed in claim 14, **characterized in that**, said spacecraft comprising a body (12) comprising several substantially plane external faces, the three reception antennas (A1, A2, A3) are arranged on one and the same external face of said body.

**Fig. 1**

**Fig. 2**

50

51                          52                          55

| Obtention des positions des satellites et de l'engin | → | Estimation des écarts angulaires inter-satellites | → | Estimation des erreurs spatiales | → erreurs spatiales |

mesures de phases →

53                          54

| Estimation des directions d'incidence des satellites | → | Estimation des écarts angulaires inter-satellites | → |

## Fig. 3

## Fig. 4

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0022452 A1

- FR 2926891